(19) **Europäisches Patentamt European Patent Office Office européen des brevets**

(11) **EP 2 822 911 B1**

(12) **FASCICULE DE BREVET EUROPEEN**

(45) Date de publication et mention
de la délivrance du brevet:
**20.11.2019 Bulletin 2019/47**

(51) Int Cl.:
***C04B 28/02*** (2006.01)

(21) Numéro de dépôt: **12707784.0**

(86) Numéro de dépôt international:
**PCT/EP2012/054166**

(22) Date de dépôt: **09.03.2012**

(87) Numéro de publication internationale:
**WO 2013/131583 (12.09.2013 Gazette 2013/37)**

(54) **COMPOSITION SECHE A BASE DE LIANT MINERAL ET DESTINEE A LA PREPARATION D'UNE FORMULATION HUMIDE DURCISSABLE POUR LE BATIMENT**

TROCKENE ZUSAMMENSETZUNG AUF DER BASIS EINES MINERALISCHEN BINDERS ZUR HERSTELLUNG EINER FEUCHTFORMULIERUNG FÜR DIE BAUINDUSTRIE

DRY COMPOSITION BASED ON A MINERAL BINDER, USED FOR PREPARING A MOIST FORMULATION FOR THE BUILDING INDUSTRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**14.01.2015 Bulletin 2015/03**

(73) Titulaire: **PAREXGROUP SA**
**92440 Issy Les Moulineaux (FR)**

(72) Inventeurs:
• **DANTIN, Véronique**
**F-38291 Saint-Quentin Fallavier (FR)**
• **GONCALO, Paulo**
**F-38291 Saint-Quentin Fallavier (FR)**
• **PERSOZ, Stéphanie**
**F-38291 Saint-Quentin Fallavier (FR)**

(74) Mandataire: **Plasseraud IP**
**235 Cours Lafayette**
**69006 Lyon (FR)**

(56) Documents cités:
**WO-A1-2004/101952      FR-A1- 2 955 103**
**FR-A1- 2 955 104      US-A1- 2010 190 888**

## Description

### Domaine technique

Le domaine technique de l'invention est celui des compositions de poudres destinées à la préparation de formulations humides pour le bâtiment par exemple d'enduits, de mortiers, de bétons ou de colles pour le bâtiment.

Ces formulations humides peuvent être obtenues :

- directement par gâchage des compositions de poudres sur les chantiers (*e.g.* enduits, mortiers, bétons ou colles pour le bâtiment),
- gâchage des compositions de poudre dans des sites industriels pour la réalisation de pièces préfabriquées telles que par exemple des plaques, des blocs bétons ou des monomurs.

Plus précisément, l'invention concerne des compositions sèches à base de liants minéraux et d'un Polymère SuperAbsorbant -PSA- et qui sont aptes à produire après gâchage avec de l'eau à des taux élevés de gâchage par exemple supérieurs à 50 %, des formulations humides permettant la réalisation d'articles durcis allégés, tels que des revêtements ou enduits extérieurs ou intérieurs (e.g. système d'isolation thermique par l'extérieur -ITE-/ décoration/ protection/ imperméabilisation), des colles, des objets massiques....

### Arrière plan technologique

Dans ce domaine technique, un besoin constant existe pour un système "mousse" intégrant de l'air dans les enduits, les mortiers et les bétons humides ou durcis, de façon à les alléger et à leur procurer des propriétés intéressantes notamment en termes d'isolation acoustique et/ou thermique et de résistance thermique ou résistance anti feu. Ces mousses d'enduits, de mortiers ou de bétons humides, de densité faible, devraient également posséder une bonne ouvrabilité ou maniabilité. Les propriétés d'isolation acoustique et/ou thermique de ces mousses d'enduits, de mortiers ou de bétons, seraient particulièrement appréciées pour des revêtements de sols ou ragréages, pour des enduits extérieurs pour la protection des façades, pour des mortiers coupe-feu, entre autres.

On connaît déjà un certain nombre d'adjuvants pour compositions d'enduits de mortiers ou de béton, ayant pour fonction de générer des gaz in situ et donc de former une mousse après gâchage et une porosité après durcissement. C'est le cas notamment des poudres d'aluminium aptes à produire de l'hydrogène en milieu aqueux ou alcalin, de même que le peroxyde d'hydrogène qui dégage rapidement de l'oxygène lorsqu'il est en contact avec des catalyseurs tels que l'argent ou le permanganate de potassium. D'autres familles d'adjuvants générateurs in situ de gaz en milieu cimentaire tels que l'oxygène, l'azote, l'hydrogène, le dioxyde de carbone, le monoxyde de carbone, l'ammoniac, le méthane, sont décrits dans le US7288147B de la société Construction Research & Technology.

Les blocs allégés de type YTONG® et les murs allégés commercialisés par la société XELLA® sont obtenus par autoclavage de blocs de silicate de calcium qui ont été préalablement allégés par l'introduction de poudre d'aluminium, génératrice d'hydrogène. Ces éléments préfabriqués présentent des propriétés d'isolation thermique et de résistance mécanique permettant leur utilisation comme éléments de structure (cas des blocs Thermopierre présentant une valeur de lambda proche de 0,12 W/m.Kt et une résistance mécanique de 3-5 MPa environ) ou bien comme éléments de parement non porteurs, apportant une isolation thermique complémentaire (cas des parements Multipor® présentant une valeur de lambda proche de 0,048 W/m.K et une résistance mécanique de 0,5 MPa). L'obtention de ces éléments nécessite la manipulation de poudre d'aluminium qui nécessite des précautions particulières compte tenu de son caractère explosif. De plus, une étape coûteuse d'autoclavage est nécessaire pour conférer à ces éléments la tenue mécanique nécessaire. Cette technique est donc inexploitable sur chantiers. De plus, pour ce qui concerne la production de pièces préfabriquées, il existe une demande pour des technologies alternatives de production d'éléments préfabriqués présentant les mêmes types de performances mécaniques et d'isolation thermique, qui évitent l'utilisation de poudre d'aluminium (suppression des problèmes potentiels d'explosion) et qui évitent l'étape coûteuse d'autoclavage: coût énergétique, faible productivité et investissements spécifiques.

On connaît également des adjuvants pour enduits mortiers béton entraîneur d'air, qui ont vocation à piéger l'air environnant, lors du mélange avec l'eau (gâchage) des compositions sèches d'enduits, de mortiers ou de béton. Ces entraîneurs d'air sont par exemple des tensioactifs, des acides gras, des sels alcalins d'acides gras tels que le laurylsulfate de sodium. De tels adjuvants entraîneurs d'air connus sont perfectibles.

En effet, toute la difficulté de cette voie de production de mousses par entraînement d'air, réside dans la stabilisation de l'air emprisonné au sein de la matrice humide d'enduit de mortier ou de béton.

Cette stabilisation est d'autant plus délicate qu'elle ne doit pas être obtenue au détriment des propriétés d'usage (e.g. de la maniabilité) des formes humides de mousses d'enduits, de mortiers et de béton, ni au détriment des propriétés (notamment mécaniques) attendues pour les formes durcies de ces mousses.

En outre, la stabilité de la mousse doit également être présente à chaque étape des procédés de préparation et d'application. Cela doit se traduire par une densité ne variant pas au cours de chaque étape, que ce soit en cuve de malaxage, après passage dans les tuyaux (densité sortie de lance dsl) ou lors de la projection, lorsque l'application s'opère ainsi. En revanche, cette densité peut être différente entre chaque étape. La reproductibilité et la fiabilité du procédé d'obtention de ces mousses, si elles sont délicates en milieu industriel, posent un vrai problème de robustesse lorsque l'on envisage une mise en œuvre directement sur un chantier par des opérateurs non qualifiés. Dans la pratique, leur utilisation sur chantier est très limitée car elle nécessite une main d'œuvre hautement qualifiée.

Pour perfectionner cette voie de production de mousses par entraînement d'air, FR2955103A propose une composition sèche pour la préparation de mousses d'enduits, de mortiers et de bétons pour le bâtiment, qui deviennent poreuses une fois durcies, de manière à être allégées, isolantes thermiquement et/ou acoustiquement, aussi bien sous forme pâteuse que sous forme durcie, et qui sont obtenues par entraînement d'air lors du gâchage. Cette composition comporte un adjuvant moussant comprenant :

A. un éther d'amidon modifié de viscosité brookfield comprise entre 500 et 25.000 mPa.s. ;
B. un stabilisant comprenant au moins un polyacrylamide linéaire ;
C. un polymère filmogène.

FR2955104A concerne un matériau thermo-isolant à structure cellulaire comprenant en poids par rapport au poids total du matériau : - 4 à 96% d'un liant hydraulique caractérisé avant mise en contact avec de l'eau ,en ce qu'il comprend au moins une phase choisie parmi C3A, CA, C12A7, C11A7CaF2, C4A3\$ (yée lemite), $C2A_{(1-x)}F_x$ (avec C → CaO ; A → $Al_2O_3$, F → $Fe_2O_3$ et x appartenant à ]0, 1]), des phases amorphes hydrauliques présentant un ratio molaire C/A compris entre 0,3 et 15 et tel que les teneurs cumulées en $Al_2O_3$ de ces phases soient comprises entre 3 et 70 % en poids du total du liant hydraulique, - 4 à 96% d'au moins une charge; ledit matériau présentant un coefficient de conductivité thermique à 20°C, égal ou inférieur à 0,20 W/m.°C. Ce matériau thermo-isolant est obtenu à partir d'une mousse.

Ces mousses aqueuses selon les FR2955103 & FR2955104 sont perfectibles, car d'une part, leur stabilité n'est pas à toute épreuve, et, d'autre part, leur mélange à un slurry de ciment est une opération d'incorporation qui doit être effectuée délicatement pour ne pas casser ces mousses. Une telle opération est difficile à mettre en œuvre dans des conditions de chantier et nécessite l'utilisation de machines spécifiques.

Il est également important que le gain en termes d'allégement ne se fasse pas au détriment des autres propriétés requises pour les réalisations obtenues à partir des formulations humides enduits, mortiers, bétons, issues des compositions cimentaires sèches. Sont ici visées, les propriétés de la formulation humide: maniabilité, ouvrabilité, "pompabilité", rhéologie, facilité de mélange et d'application ainsi que de nettoyage des outils et les propriétés des produits durcis obtenus à partir de cette formulation humide : protection/imperméabilisation, isolation thermique et acoustique, dureté, résistance à la fissuration, résistance à la flexion, résistance à la compression, et durabilité.

La demande de brevet US2003/144386A décrit des mélanges de matériaux de construction à prise hydraulique, comprenant moins de 2% en poids de particules de taille supérieure à 200 $\mu$m d'un polymère apte à former un hydrogel. En particulier, US 2003/144386 divulgue des mortiers standard préparés conformément à la norme EN 196 (1350g de sable normalisé - 450g de ciment - 225g eau de gâchage), dans lesquels sont incorporés 0,5 % en poids des Polymères SuperAbsorbants (PSA) Hysorb® C3746-1 & C Hysorb® 3746-5 de BASF® ayant moins de 2 % en poids de particules de taille supérieure à 200 $\mu$m ainsi qu'un PSA comparatif Hysorb® C 7015 de BASF® ayant nettement plus de 2% en poids de particules de taille supérieure à 200 $\mu$m. Ces trois mortiers sont comparés entre eux et au mortier standard sans PSA. Les PSA Hysorb® C3746-1 & C Hysorb® 3746-5 permettent d'accroitre les résistances à la compression et à la flexion des produits finis durcis obtenus à partir de ces mortiers, par rapport à ceux obtenus via le mortier standard sans PSA.

La demande de brevet US2010/190888A décrit un mélange sec de matériaux de construction à prise hydraulique, de préférence une colle à carrelage en conformité avec la norme EN 12004, caractérisé en ce qu'il comprend :
a) de 10 à 95 pour cent en poids d'un liant hydraulique contenant du ciment,
b) de 5 à 75 pour cent en poids de charges minérales et / ou des charges organiques,
c) de 0,5 à 10 pour cent en poids d'une poudre de polymère redispersible,
d) de 0,1 à 1.5 pour cent en poids d'un agent de rétention d'eau qui est basé sur des structures polysaccharidiques et est de préférence choisi parmi le groupe constitué d'éthers de méthylhydroxypropylcellulose (MHPC) et/ou de méthylhydroxyethylcellulose (MHEC),
e) de 0,3 à 4,0 pour cent en poids d'un accélérateur de prise complémentaire choisi parmi le groupe constitué de formiate de calcium, chlorure de calcium, nitrate de calcium et
$f_a$) ou $f_b$) de 0,02 à 2.0 pour cent en poids d'un copolymère acrylique de type anionique ou cationique pulvérulent, qui est de préférence gonflable au moyen de solutions d'eau ou de sel et est particulièrement de préférence insoluble dans l'eau et peut avantageusement être préparés par polymérisation radicalaire de composés vinyliques éthyléniquement

insaturés; $f_a$) ou $f_b$) ayant une distribution de taille des particules déterminée conformément à la norme 420 EDANA.2-02, telle que plus de 98 % en poids passent un tamis ayant un maillage de 200 μm. Les compositions divulguées sont :

| Colle à carrelage | Colle à carrelage | Système d'isolation thermique composite |
|---|---|---|
| a) CEM II A 42,5 R | a) Ciment Portland CEM I | a) ciment Portland (Par exemple CEM I 42,5 R) |
| b) charge siliceuse légère | b) sable de silice et granulats calcaires | b) Sable de silice ou pierre calcaire broyée |
| c) Copolymère d'éthylène vinyle acétate | c) copolymère Acétate de vinyle-éthylène | c) copolymère Acétate de vinyle-éthylène |
| d) Hydroxypropylméthylcellulose | d)Hydroxypropylméthylcellulose de cellulose et éther d'amidon | d)Hydroxypropylméthylcellulose de cellulose |
| e) Formiate de calcium | e) Accélérateur formiate de calcium | e)Formiate de calcium |
| $f_a$) copolymère 1 (anionique): 0,96% | fa) copolymère 1 (anionique) ou fb) copolymère 2 (cationique) : 0,30 ou 0,45 % | $f_a$) copolymère 1 (anionique) ou $f_b$) Copolymère 2 (cationique) : 0,30 ou 0,4 % |
| Fibres de cellulose | Fibres de cellulose | |
| bentonite sodique | | |
| FeSO4-7H20 | | |
| Taux de gâchage : 76% | Taux de gâchage : 36 % | Taux de gâchage : 25 % |

Les compositions selon cette demande US2010/190888 visent à améliorer le rendement à savoir le rapport entre le *volume de la formulation humide / masse du mortier sec,* pour des raisons économiques (*e.g.* diminuer les stocks de mortier sec). L'utilisation de formiate de calcium ou autres sels de calcium participe à l'accélération de la vitesse de prise selon la demande US2010/0190888A.

WO2004/101952 décrit une composition pour cimenter un puits, comprenant un coulis de ciment pompable, de l'eau et un polymère superabsorbant PSA (polyacrylamide, polyméthacrylate, polyacrylique non soluble), ajouté à sec dans le coulis de ciment, dans une concentration de 0,05-3,2% en poids par rapport au ciment, sous la forme de particules de taille comprise entre 10 et 1500 microns. La composition comprend également un sel (NaCl-CaC12). WO2004/101952 divulgue des ciments pour puits de pétrole, c'est-à-dire des ciments Portland comme le black Dickerhoff utilisé dans les exemples 1 à 9 de D1. Ces ciments sont exempts d'ions A1+++ disponibles, mais comporte seulement un élément aluminium constituant l'alumine qui est piégé dans ce réseau cristallin.

En outre la composition selon WO2004/101952 ne contient pas de composant (c) formant une source d'ions aluminium. A fortiori, cette composition selon WO2004/101952 ne comprend pas de 0,10 à 20 % poids sec de ce composant (c).

WO2004/101952 ne divulgue pas des compositions sèches allégées pour le bâtiment comportant un liant minéral et destinées à la préparation d'une formulation humide qui soit, d'une part, riche en liquide de gâchage (e.g. eau), comportant au moins une fois et demi la quantité d'eau contenue dans un mortier classique sans superabsorbant (PSA), et, d'autre part, durcissable en produits allégés, thermiquement isolant et mécaniquement résistants.

**Problème technique - Objectifs de l'invention**

Dans ce contexte, le problème technique à la base de la présente invention est de satisfaire à au moins l'un des objectifs énoncés ci-après :

   (i) Fournir une composition sèche (*e.g.* cimentaire) conduisant, après gâchage, à des formulations humides (pâtes-enduits-mortiers-bétons-colles) performantes et, après durcissement, à des produits allégés du bâtiment.
   (ii) Fournir une composition sèche (*e.g.* cimentaire) conduisant, après gâchage, à des formulations humides (enduits-mortiers-bétons-colles) riches en liquide de gâchage (*e.g.* eau) et, après durcissement, à des produits allégés du bâtiment, et ce avec des ratios *volume de formulation humide (pâte) / volume ou masse de composition sèche,* améliorés, notamment par rapport aux compositions classiques de référence telles que celles selon la demande US2010/190888.

(iii) Fournir une composition sèche (*e.g.* cimentaire) conduisant, après gâchage, à des formulations humides (enduits-mortiers-bétons-colles) riches en liquide de gâchage (*e.g.* eau) et, après durcissement, à des produits allégés du bâtiment, et ce avec des ratios *volume de formulation humide (pâte) /volume ou masse de composition sèche* améliorés, ces produits allégés permettant de diminuer l'empreinte environnementale de la composition en réduisant les émissions de $CO_2$ lors du transport.

(iv) Fournir une composition sèche (*e.g.* cimentaire) conduisant, après gâchage, à des formulations humides (enduits-mortiers-bétons-colles) riches en liquide de gâchage (*e.g.* eau) et, après durcissement, à des produits allégés du bâtiment, et ce avec des ratios *volume de formulation humide (pâte) /volume ou masse de composition sèche* améliorés, ces produits allégés permettant de diminuer la pénibilité du travail de l'utilisateur en mettant à disposition des sacs plus légers par surface travaillée identique.

(v) Fournir une composition sèche (*e.g.* cimentaire) conduisant, après gâchage, à des formulations humides (enduits-mortiers-bétons-colles) riches en liquide de gâchage (*e.g.* eau), et comportant au moins une fois et demi la quantité d'eau contenue dans un mortier classique sans superabsorbant.

(vi) Fournir une composition sèche (*e.g.* cimentaire) conduisant, après gâchage avec un liquide (*e.g.* eau), à des formulations humides (enduits-mortiers-bétons-colles) projetables aisément, simples à mettre en œuvre, présentant une consistance et une viscosité de pâte permettant le pompage par une machine à projeter, une aptitude au pompage, une ouvrabilité suffisamment longue pour réaliser le gâchage et l'application notamment d'enduits, tout en restant économiques, et stables après gâchage.

(vii) Fournir une composition sèche (*e.g.* cimentaire) conduisant, après gâchage avec un liquide (*e.g.* eau), à des formulations humides (enduits-mortiers-bétons-colles) permettant produire des revêtements de protection /imperméabilisation, voire éventuellement des revêtements de décoration.

(viii) Fournir une composition sèche (*e.g.* cimentaire), selon l'alinéa (vii), conduisant, après gâchage avec un liquide (*e.g.* eau), à des formulations humides (enduits-mortiers-bétons-colles) qui, une fois appliquées sur un support , ou une fois façonnées ou bien une fois coulées entre deux parois ou dans un coffrage , puis durcies, présentent, d'une part, une conductivité thermique réduite $\lambda$ (W.m$^{-1}$.K$^{-1}$) inférieure ou égale à 1, préférentiellement à 0,85.

(ix) Fournir une composition sèche (*e.g.* cimentaire), selon l'un au moins des alinéas (i) à (viii), et qui en outre soit suffisamment stable sous forme humide (pâte) après gâchage, pour pouvoir être appliquée ou mise en forme et qui ait des propriétés mécaniques durables sous forme durcie.

(x) Fournir une composition sèche (*e.g.* cimentaire) conduisant, après gâchage, à des formulations humides (pâtes-enduits-mortiers-bétons-colles) performantes et, après durcissement, à des pièces préfabriquées allégées pour le bâtiment, sans recourir à une étape d'autoclavage coûteuse.

(xi) Fournir une formulation humide, obtenue par gâchage avec un liquide (*e.g.* l'eau) de la composition cimentaire visée dans les objectifs ci-dessus, ladite formulation humide présentant au moins l'une des propriétés susmentionnées.

(xii) Fournir des procédés de préparation de la composition cimentaire et de la formulation humide correspondante, qui soient faciles à mettre en œuvre et qui soient économiques.

(xiii) Fournir des produits durcis allégés (préfabriqués ou non) pour le bâtiment obtenus au moyen de la formulation humide évoquée dans les objectifs ci-dessus mentionnés (pâtes-coulis- enduits-mortiers- bétons, compositions de mortier-colles, blocs bétons, panneaux sandwich), simples à obtenir (sans poudres d'aluminium dangereuses), économiques (sans autoclavage), dotés de bonnes performances mécaniques à long terme (dureté, résistance en flexion/compression, durabilité, cohésion) et ayant de bonnes performances de mise en œuvre.

## Brève description de l'invention

Le problème ci-dessus mentionné est résolu par l'invention qui propose une composition sèche optimisée, destinée à la préparation d'une formulation humide pour le bâtiment, comprenant une source d'ions aluminium Al$^{3+}$.

D'où il s'ensuit que la présente invention concerne, dans un premier de ses aspects, une composition sèche selon la revendication 1.

La mise en œuvre de cette composition a)b)c) permet d'obtenir des produits durcis pour le bâtiment présentant un excellent compromis allégement/propriétés mécaniques.

Cette composition a)b)c) optimise l'hydratation du liant. De plus, l'allégement est acquis sans augmentation exagérée du volume, comme c'est le cas avec les adjuvants moussants. En outre, cet allégement est stable.

L'invention permet d'obtenir des ratios élevés *volume de formulation humide (pâte) / volume ou masse de composition sèche.* Cela va dans le sens de l'atténuation de l'empreinte environnementale : moindre coût de transport pour la composition sèche, d'une moindre pénibilité pour les utilisateurs, pour une surface travaillée donnée, tant en ce qui concerne la manipulation de la composition sèche et de la formulation humide, que l'application de cette dernière. La sécurité sur le chantier y gagne.

Il doit être souligné que la composition selon l'invention donne accès à des formulations humides aisément préparables, parfaitement maniables, de rhéologie et d'ouvrabilité adaptées et, in fine, à des revêtements ou des objets massiques durcis (préfabriqués ou non), ayant des propriétés mécaniques tout à fait satisfaisantes et stables dans le temps. Le cahier des charges est également satisfait au regard des spécifications de décoration, de protection et d'imperméabilisation. Par ailleurs, la composition suivant l'invention permet de conduire à des revêtements durcis présentant une bonne résistance au feu.

Selon un autre de ses aspects, l'invention vise également une formulation humide pour le bâtiment caractérisée en ce qu'elle comprend la composition selon l'invention et un liquide, de préférence de l'eau, de préférence selon un taux de gâchage supérieur ou égal à 25 % en poids, de préférence à 40 % en poids.

En particulier, la formulation humide (enduit, mortier, béton) selon l'invention est doté de bonnes performances de mise en œuvre telles que "l'ouvrabilité" ou des propriétés rhéologiques adaptées au pompage. En outre, cet enduit présente notamment de bonnes performances mécaniques.

Selon un autre de ses aspects, l'invention vise un procédé de préparation de la formulation humide selon l'invention, caractérisé en ce qu'il consiste essentiellement à mélanger un liquide, de préférence de l'eau à tout ou partie des composants de la composition selon l'invention, le reste des composants étant ensuite incorporé progressivement dans le mélange si cela n'a pas été fait auparavant.

Selon un autre de ses aspects, l'invention vise un produit du bâtiment durci obtenu à partir de la formulation humide selon l'invention.

Selon un autre de ses aspects, l'invention vise un procédé d'application sur une surface de bâtiment ou de fabrication d'ouvrage de bâtiment de génie civil au moyen de la formulation humide telle que visée ci-dessus.

Selon un autre de ses aspects, l'invention vise l'utilisation d'au moins un Polymère SuperAbsorbant -PSA- pour augmenter le taux d'hydratation d'une composition sèche à base de liant hydraulique (a), incorporant au moins un Polymère SuperAbsorbant -PSA-(b), et destinée à la préparation d'une formulation humide pour le bâtiment.

*Définitions*

Dans tout le présent exposé, tout singulier désigne indifféremment un singulier ou un pluriel.

Les définitions données ci-après à titre d'exemples, peuvent servir à l'interprétation du présent exposé :

- *"polymère"* désigne indifféremment *"homopolymère"* et *"copolymère"* ;
- *"mortier"* désigne un mélange sec ou humide ou durci d'un ou plusieurs liants organiques et/ou minéraux, de granulats de diamètre < 5mm (sables -agrégats) et éventuellement de fillers et/ou d'additifs et/ou d'adjuvants ;
- *"enduit"* désigne plus spécialement un mortier utilisé en revêtement superficiel d'une surface afin de la protéger, l'homogénéiser, la décorer, etc. ;
- *"colle"* désigne une composition sèche, humide ou durcie, servant à coller du carrelage sur un support ;
- *"pâte"* désigne une composition humide contenant de l'eau ;
- *"charge* " est une charge dont la densité apparente est supérieure à 0,75 ;
- *"charge légère"* est une charge dont la densité apparente est inférieure ou égale 0,75 ;
- *"liquide":* dispersion, émulsion ou solution à base aqueuse.

**Description détaillée de l'invention**

*COMPOSITION SECHE*

Les inventeurs ont eu le mérite de mettre une composition (*e.g.* cimentaire) sèche qui conduit après durcissement (*e.g.* gâchage à l'eau), à la formation de produits durcis pour le bâtiment, qui sont allégés, mécaniquement résistants, peu volumineux avec de hauts rendement *volume de formulation humide (pâte)* /*volume ou masse de composition sèche.*

Dans un mode de réalisation de la composition selon l'invention, le liant (a) n'est pas une source d'ions aluminium.

Alors, de préférence, dans ce cas, le composant accélérateur (c) comporte au moins une source d'ions aluminium. En d'autres termes, le composant accélérateur (c) est par exemple une source d'ions aluminium.

Dans ce mode de réalisation, il est avantageux que :

- la concentration en liant (a) est comprise dans les gammes de concentrations suivantes, exprimées en % poids sec de la composition et données dans un ordre croissant de préférence :
  [15- 99,5] ; [20 - 98] ; [25 - 97] ; [25- 96] ; [30 - 95]
- et la concentration en composant accélérateur (c) est comprise dans les gammes de concentrations suivantes, exprimées en % poids sec de la composition et données dans un ordre croissant de préférence :

[0,10- 20] ; [0,15- 20] ; [0,15- 15] ; [0,15- 10] ; [0,2- 10]

Liant minéral (a)

De préférence, le liant minéral (a) est choisi seul ou en combinaison dans le groupe comprenant :

(i) les liants minéraux qui ne comportent pas de source(s) d'ions aluminium, de préférence parmi les ciments de portland et/ou parmi les ciments de laitier, les ciments géopolymères, les pouzzolanes naturelles, les cendres volantes, les ciments supersulfatés, les sulfates de calcium (gypse, hémihydrate et/ou anhydrite), les chaux (vive, éteinte et/ou hydraulique), les silicates de potassium, sodium, et/ou lithium ;
(ii) les liants minéraux qui comportent une ou plusieurs sources d'ions aluminium sont choisis seuls ou en combinaison ;

- de préférence parmi les ciments à base d'aluminate de calcium (CAC) et/ou à base de sulfo-aluminate de calcium (CSA) et/ou les liants à haute teneur en phases cimentaires riches en alumine ;
- et plus préférentiellement encore liants hydrauliques comprenant :

  ◦ au moins une phase choisie parmi $C_3A$, $CA$, $C_{12}A_7$, $C_{11}A_7CaF_2$, $C_4A_3\$$ (yée lemite), $C_2A_{(1-x)}F_x$ (avec C → CaO ; A → $Al_2O_3$; F → Fe2O3 et x appartenant à ]0, 1]),
  ◦ des phases amorphes hydrauliques présentant un ratio molaire C/A compris entre 0,3 et 15,
  ◦ et tels que les teneurs cumulées en $Al_2O_3$ de ces phases soient comprises entre :

    3 et 70 % en poids du total du liant hydraulique,
    préférentiellement entre 7 et 50% en poids,
    et mieux entre 20 et 30% en poids.

Les liant hydrauliques (a.ii) de type sulfo-alumineux, formant principalement, lors de leur hydratation, de l'ettringite. Les clinkers sulfoalumineux sont obtenus à partir d'un mélange de carbonate de calcium sous forme calcaire, de bauxite, et de sulfate de calcium, qui est soit du gypse, de l'anhydrite ou de l'hémihydrate. Le constituant principal à l'issue du processus de fabrication est la Yeelimite, C4A3$ . Une source possible de liant sulfo-alumineux est le CTS 25 Belitex (75% de CSA, 25% de gypse).

PSA (b)

De préférence, la concentration en [PSA] (b) est définie comme suit, en % en poids sur sec, selon un ordre croissant de préférence :

$$0,1 \leq [PSA] \leq 20 \,;$$

$$0,2 \leq [PSA] \leq 15 \,;$$

$$0,3 \leq [PSA] \leq 10 \,;$$

$$0,4 \leq [PSA] \leq 7 \,;$$

$$0,5 \leq [PSA] \leq 6.$$

Les PSA sont par exemple des polymères pulvérulents :

- gonflables au moyen d'eau ou de solutions aqueuses de sels pour former un hydrogel, aptes à absorber au moins 30, 50, 100, 200, 300, 400 fois leur poids, selon un ordre croissant de préférence ;
- réticulés ;
- de poids moléculaire élevé ;

- soit anioniques et/ou cationiques ;
- et susceptibles d'être obtenus par polymérisation radicalaire de composés (par exemple vinyliques) éthyléniquement insaturés et par séchage ultérieur des polymères obtenus.

Les hydrogels sont, par exemple, des gels contenant de l'eau fixée à des polymères hydrophiles et réticulés selon des réseaux tridimensionnels.

Le PSA (b) est de préférence choisi dans le groupe comprenant ou mieux encore constitué par :

- les polyacrylates de sodium réticulés ;
- les copolymères réticulés d'acrylamide et d'acrylate de sodium ;
- les copolymères réticulés d'acrylate de sodium ou d'acrylamide et d'un composé comprenant au moins un groupement de type sulfonique et/ou phosphonique ;
- les copolymères réticulés d'amidon et d'acrylonitrile hydrolysés ;
- les copolymères réticulés d'anhydride maléique et d'éthylène ;
- les carboxyméthylcelluloses réticulées ;
- l'oxyde polyéthylènique réticulé ;
- et/ou les polymères à base d'alcool polyvinylique greffés par de l'acide phosphorique ;
- et leurs mélanges.

La densité de réticulation, la granulométrie et l'anionicité des PSA peuvent varier.

Source d'ions aluminium (c)

La source d'ions aluminium (c) est de préférence choisie parmi les composés suivants, utilisés seuls ou en combinaison :
les alumines amorphes par exemple de type Axilat SA 502, les phosphates d'aluminium, sels fluorés d'aluminium, les carbonates d'aluminium, les aluminates de sodium, le sulfate d'aluminium et les sels d'aluns par exemple de type sulfates mixtes d'aluminium, de sodium et de potassium, les sels solubles d'aluminium de préférence choisis dans le groupe comprenant ou mieux encore constitué par: le sulfate d'aluminium, les chlorures et polychlorures d'aluminium, les nitrates et nitrites d'aluminium, le thiocyanate d'aluminium, le citrate d'aluminium et leurs mélanges.

Autres composants (adjuvants)

Avantageusement, la composition selon l'invention comprend, outre les composants (a)-(b)-(c) au moins l'un des composants suivants :

(d) un retardateur de prise ;
(e) un accélérateur de prise complémentaire ;
(f) un rétenteur d'eau ;
(g) une charge ;
(h) une charge légère;
(i) un hydrofugeant ;
(j) un colorant ;
(k) des fibres ;
(l) un anti-mousse ;
(m) une résine en poudre redispersible ;
(n) un agent rhéologique ;
(o) un agent entraineur d'air ou agent moussant ;
(p) un agent générateur de gaz ;
(q) un ignifugeant.

De préférence, cette composition présente au moins l'une des caractéristiques suivantes:

(d) le retardateur de prise (d) est de préférence choisi dans le groupe comprenant ou mieux encore constitué par les agents chélatant du calcium, les acides carboxyliques et leurs sel, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium;

les phosphonates de sodium ; les sulfates et leurs sels de sodium ou de potassium, et leurs mélanges ;

(e) l'accélérateur de prise complémentaire (e) est choisi dans le groupe comprenant ou mieux encore constitué par les sels alcalins et alcalino-terreux d'hydroxydes, d'halogénures, de nitrates, de nitrites, de carbonates, de thiocianates, de sulfates, de thiosulfates, de perchlorates, de silice, d'aluminium, et/ou parmi les acides carboxylique et hydrocarboxyliques et leurs sels, les alcanolamines, les composés insolubles silicatés tels les fumées de silices, cendres volantes ou pouzzolanes naturelles, les ammonium quaternaires silicatés, les composés minéraux finement divisés tels les gels de silice ou les carbonates de calcium et/ou de magnésium finement divisés, et leurs mélanges; cet accélérateur de prise complémentaire (e) étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges ;

(f) le rétenteur d'eau (f) est choisi dans le groupe comprenant ou mieux encore constitué par les polysaccharides et de préférence les éthers de cellulose ou d'amidon et leurs mélanges, et de préférence dans le groupe comprenant les méthylcelluloses, les hydroxyethylcelluloses, les méthylhydroxy-propylcelluloses, les méthylhydroxyéthyl-celluloses et leurs mélanges, ou parmi les éthers de guar modifiés ou non et leurs mélanges ou le mélange de ces différentes familles ;

(g) la charge (g) est choisie dans le groupe comprenant ou mieux encore constitué par: les fillers et/ou les sables, de préférence parmi les sables siliceux, calcaires, silico-calcaires, magnésiens et leurs mélanges, les fillers siliceux, calcaires et silico-calcaires, magnésiens et leurs mélanges, et/ou parmi les oxydes métalliques, les alumines, et/ou parmi les billes de verre et les minéraux silicatés naturels et synthétiques de préférence choisis parmi les argiles, micas, métakaolins, fumées de silice et leurs mélanges ;

(h) la charge légère (h) est choisie dans le groupe comprenant ou mieux encore constitué par: la perlite expansée, la vermiculite expansé, les aérogels de silice, le polystyrène expansé, les cénosphères (fillites), les billes creuses d'alumine, les argiles expansées, les ponces, les billes de verre creuses (type 3M®) ou les granulés de verre expansés (Poraver®, Liaver®), les grains de mousse de silicate, la rhyolithe (Noblite®) ;

(i) l'hydrofugeant (i) est choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges ;

(j) le colorant (j) est choisi dans le groupe comprenant ou mieux encore constitué par les pigments organiques et/ou minéraux, et plus particulièrement parmi les oxydes de fer, de titane, de chrome, d'étain, de Nickel, de Cobalt, de Zinc, d'antimoine, et/ou parmi les aluminosilicates de sodium polysulfurés, le carbone, les sulfures de cobalt, de manganèse, de zinc, et/ou parmi les pigments à haute transparence ou haute réflectance aux infra-rouges et leurs mélanges ;

(k) Les fibres (k) comprennent des fibres minérales, animales, végétales et synthétiques, plus particulièrement choisies dans le groupe comprenant ou mieux encore constitué par les fibres de polyamide, de polyacrylonitrile, de polyacrylate, de cellulose, de polypropylène, d'alcool polyvinylique, de verre, métalliques, de lin, de polycarbonate, de sisal, de jute, de chanvre et des mélanges de ces fibres ;

(1) L'anti-mousse (1) est choisi dans le groupe comprenant ou mieux encore constitué par les polyols de polyéther, les molécules hydrocarbonées, les molécules siliconés, esters hydrophobes, les tensioactifs non ioniques, les polyoxiranes, et leurs mélanges ;

(m) La résine poudre redispersible (m) est choisie dans le groupe comprenant ou mieux encore constitué par les familles des résines homo ou copolymères acryliques, copolymères de vinylacétate-éthylène, copolymères styrène-acrylique, les terpolymères d'acétate de vinyle, de versatate de vinyle et de dialkylester d'acide maléique, les copolymères d'acétate de vinyle et versatate de vinyle, les copolymères de styrène et butadiène, et leurs mélanges ;

(n) L'agent rhéologique (n) est choisi dans le groupe comprenant ou mieux encore constitué par les agents épaississants, les agents fluidifiants (minéraux et/ou organiques) et leurs mélanges, et préférentiellement dans le sous-groupe comprenant ou mieux encore constitué par les polysaccharides et leurs dérivés, les alcools polyvinyliques, les épaississants minéraux, les polyacrylamides linéaires, les polynaphtalènes sulfonates, les polymélamines sulfonates, les polycarboxylates et leurs mélanges ;

(o) Les agents entraineurs d'air ou agents moussants sont choisis parmi :

    i. les sources de surfactants anioniques de type par exemple, alkyl sulfates, alkyl ether sulfates, alkaryl sulfonates, les alkylsuccinates, alkylsulpho succinates, alkoyl sarcosinates, alkyl phosphates, alkylether phosphates, alkylether carboxylates, et alpha olefine sulfonates ,préférentiellement le lauryl sulfate de sodium,

    ii. Les surfactants non ioniques de type alcools gras ethoxylés, mono ou di alkyl alkanolamides, les alkyl polyglucosides,

    iii. Les surfactants amphoteriques de type alkyl amine oxides, alkyl betaines, alkyl amido propyl betaines, alkyl sulphobetaines, alkyl gkycinates, alkyl amphopropionates, alkyl amidopropyl hydroxysultaines.

(p) Les générateurs de gaz in situ sont choisis parmi les adjuvants qui génèrent au contact des compositions suivant l'invention de l'oxygène, de l'hydrogène, de l'azote, du monoxyde ou dioxyde de carbone, de l'ammoniac, du méthane. Ils peuvent être choisis parmi les adjuvants décrits dans US 7, 288,147 et en particulier dans les familles des azodicarbonamide, sodium bicarbonate, peroxydes organiques ou inorganiques, toluene sulfonyl hydrazide, benzene sulfonyl hydrazide, toluene sulfonyl acetone hydrazone, toluene sulfonyl semicarbazide, phenyltetrazole, sodium borohydride, dinitroso pentamethylenetetramine ;

(q) Les ignifugeants sont de préférence choisis dans le groupe comprenant ou mieux encore constitué par les agents retardateurs de flammes ayant des actions chimiques et/ou physiques, les retardateurs de flamme halogénés, les retardateurs de flamme phosphorés, les retardateurs de flamme azotés, les systèmes intumescents, les retardateurs de flamme minéraux, les hydroxydes métalliques, les composés de zinc, les borates, les oxydes d'antimoine, les nanocomposites basés sur les argiles à base de silicates d'aluminium, et leurs mélanges ;

de préférence dans le sous-groupe comprenant ou mieux encore constitué par le TétrachlorobisphénolA (TBBPA), les chloroparaffines, les phosphates organiques, le phosphore rouge, les phosphonates, les phosphinates, la mélamine, ses sels et homologues, les hydroxydes d'aluminium ou de magnésium, les hydroxystannates de zinc, le borate de zinc, et leurs mélanges.

Les adjuvants (d) à (q) ont pour rôle d'offrir une régularité des propriétés du matériau et permettent de remplir le cahier des charges précis propre à chaque application de la composition (e.g. cimentaire) sèche : mortier, enduit, colle.

Les retardateurs de prise (d) et les accélérateurs de prise complémentaire (e) sont des produits qui modifient les solubilités, les vitesses de dissolution et d'hydratation des divers constituants de la composition cimentaire sèche.

Le rétenteur d'eau (f) a la propriété de conserver l'eau de gâchage avant la prise. L'eau est ainsi maintenue dans la pâte d'enduit, mortier ou béton, ce qui lui confère une très bonne adhérence et une bonne hydratation. Dans une certaine mesure, elle est moins absorbée sur le support, le relargage en surface est limité et on a ainsi peu d'évaporation.

La nature de la charge (g) et/ou de la charge légère (h) peu(ven)t varier selon l'application finale de la composition. On donne ci-après des exemples de charge (g) pour différentes applications finales :

- revêtements minéraux épais (RME) ou revêtements minéraux minces (RMM): la charge est choisie parmi les sables et/ou les granulats, de préférence parmi les sables siliceux, calcaires et silico-calcaires et leurs mélanges. La charge (g) peut éventuellement être complétée par au moins un filler de type de celui-ci-après défini,
- Peintures: la charge est choisie parmi les charges minérales, de préférence parmi les fillers calcaires,
- Colles : les charges peuvent être des filler choisis parmi les charges minérales, de préférence parmi les fillers calcaires et/ou des sables, de préférence choisis parmi les sables siliceux, calcaires et silico-calcaires et leurs mélanges,
- Produits durcis massiques pour le bâtiment : les charge peuvent être des filler choisi parmi les charges minérales, de préférence parmi les fillers calcaires et /ou des sables, de préférence choisis parmi les sables siliceux, calcaires et silico-calcaires et leurs mélanges.

L'hydrofugeant (i) vise à diminuer la pénétration de l'eau dans la composition sèche ou le produit durci. A titre d'exemple, on peut citer l'oléate de sodium ou le stéarate de magnésium.

Le colorant (j) vise à donner au produit durci la teinte désirée. A titre d'exemple, on peut citer l'oxyde de fer $Fe_2O_3$ ou le dioxyde de titane $TiO_2$.

Les fibres (k) visent à améliorer les résistances mécaniques du produit durci. A titre d'exemple, on peut citer les fibres de polyacrylonitrile.

Les anti-mousses (1) sont utilisées afin d'augmenter la cohésion de l'enduit par limitation de la présence de bulles d'air. Ils permettent de réduire l'effet secondaire d'autres additifs ou conséquent au malaxage, entraînant de l'air. A titre d'exemple d'anti-mousse (1), on peut citer les polyols de polyether.

Les résines poudre redispersibles (m) visent à augmenter l'adhérence et l'élasticité. A titre d'exemple, on peut citer les copolymères de Vinylacétate-Ethylène.

Les agents rhéologiques (n) visent à modifier la consistance du produit humide pour l'adapter à son application. A titre d'exemple, on peut citer les sépiolites ou les gommes de xanthane.

Les agents moussants (o) visent à apporter de la porosité supplémentaire par entrainement d'air lors du gâchage du liant minéral.

Les agents générateurs de gaz in situ (p) visent à apporter de la porosité supplémentaire par génération d'air un situ lors du gâchage du liant minéral.

Les ignifugeants (q) protègent le produit durci contre le feu.

L'invention concerne également les combinaisons de composants (a) à (q) susceptibles d'être fournis séparément pour reconstituer au moment de l'utilisation la composition cimentaire sèche susvisée.

En particulier, il peut s'agir de mélanges prêt à l'emploi comprenant soit un mono-composant avec l'ensemble des composants nécessaires (a) à (q), soit un pluri-composant par exemple bi-composant comprenant d'une part, une partie des composants (a) à (q) susvisés et d'autre part, l'autre partie des composants (a) à (q) susvisés.

Taux de gâchage

Suivant une caractéristique remarquable de l'invention, la composition selon l'invention est conçue pour que les formulations humides pour le bâtiment qu'elle permet d'obtenir, aient un taux de gâchage supérieur ou égal à, en % en poids et selon un ordre croissant de préférence: 20; 25; 30; 40; 50; 60; 70 ; 80; 90 ; 100.

Suivant une autre caractéristique remarquable de l'invention, la composition sèche est conçue pour que les formulations humides pour le bâtiment qu'elle permet d'obtenir, aient un taux de gâchage augmenté de 1,5 fois, de préférence de 2 fois par rapport à une composition témoin sans PSA.

*FORMULATION HUMIDE*

Selon un autre de ses aspects, l'invention concerne une formulation humide formée par un mélange d'eau et de la composition (*e.g.* cimentaire) sèche ci-dessus définie.

En particulier cette formulation humide peut être utilisée pour obtenir des produits durcis allégés pour le bâtiment, tels que des revêtements ou enduits extérieurs ou intérieurs (e.g. système d'isolation thermique par l'extérieur -ITE-/ décoration/ protection/ imperméabilisation), des colles, des objets massiques....

Avantageusement, cette formulation humide pour le bâtiment est caractérisée en ce qu'elle comprend la composition selon l'invention ci-dessus définie et un liquide, par exemple de l'eau, de préférence selon un taux de gâchage supérieur ou égal à, en % en poids et selon un ordre croissant de préférence: 20; 25; 30; 40; 50; 60; 70 ; 80; 90 ; 100.

*PRODUITS DURCIS POUR LE BATIMENT*

L'invention vise également les produits durcis pour le bâtiment obtenus à partir de la formulation humide susvisée et/ou celle obtenue par le procédé défini infra, à savoir notamment les produits durcis suivants :

- produits obtenus sur chantier par durcissement des formulations humides résultant du gâchage des compositions suivant l'invention, *e.g.* :

  ◦ Mortiers colles, joints, enduits de ragréage, enduits de lissage ;
  ◦ chapes, chapes allégées pour sols chauffant ;
  ◦ Revêtements extérieurs de type Revêtements Minéraux Epais (RME) ou Minces (RMM) et les peintures minérales ;
  ◦ Composants des systèmes d'Isolation Thermique par l'Extérieur (ITE) incluant la colle pour isolant, le sous enduit servant à fixer le treillis et l'enduit extérieur de finition ;
  ◦ Colles à carrelage ;
  ◦ Joints de carrelage ;
  ◦ Enduits de jointement ;
  ◦ Enduits intérieurs et extérieurs, par exemple les enduits monocouches ;
  ◦ Matériau isolant pour l'extérieur ou l'intérieur des bâtiments ;
  ◦ Mortiers ou bétons de remplissage ;
  ◦ Mortier de calage et de scellement, mortiers de réparation pour bétons, mortiers résistants au gel dégel, système d'imperméabilisation des bétons, membranes d'étanchéité ;
  ◦ Coulis d'injection, coulis allégés pour la cimentation des puits de pétrole ;
  ◦ Mortiers ou Bétons allégés destinés à être mis en place par projection ou coulage dans des parois creuses ou dans des coffrages perdus pour la réalisation de bâtiments neufs ou la rénovation de bâtiments anciens.

- produits préfabriqués en milieu industriel par durcissement des formulations humides résultant du gâchage des compositions suivant l'invention *e.g.* :

  ◦ Panneaux préfabriqués allégés destinés au montage des bâtiments (éléments porteurs pour la structure ou panneaux d'isolation) ;
  ◦ Blocs bétons allégés destinés à être utilisés comme éléments de structure ou d'isolation ou de parement ;
  ◦ Eléments préfabriqués, tels que rebords de fenêtre, cornières, moulures etc.

*PROCEDES*

L'invention concerne également les procédés de préparation de la composition (*e.g.* cimentaire) sèche susvisée, de la formulation humide ci-dessus définie et le procédé d'application sur une surface de bâtiment ou de fabrication de produits durcis pour le bâtiment, d'ouvrages de bâtiment ou de génie civil au moyen de la formulation humide selon l'invention.

Ces procédés sont faciles à mettre en œuvre par les praticiens du bâtiment.

Le procédé de préparation de la composition (*e.g.* cimentaire) sèche selon l'invention consiste essentiellement à mélanger les composants de ladite composition.

Le procédé de préparation de la formulation humide selon l'invention consiste essentiellement à mélanger un liquide, de préférence de l'eau à tout ou partie des composants de la composition selon l'invention, telle que définie ci-dessus, le reste des composants étant ensuite incorporé progressivement dans le mélange si cela n'a pas été fait auparavant.

Ce procédé de gâchage peut être discontinu : on mélange dans la cuve d'une machine à projeter de l'eau à un mélange prêt à l'emploi comprenant tout ou partie des constituants (a) à (q). Le temps de mélange est de préférence égal à 1 à 30 min, voire 3 à 10 min. Certains des composants peuvent être incorporés progressivement.

Le procédé d'application sur une surface de bâtiment ou de fabrication d'ouvrage de bâtiment ou de génie civil, au moyen de la formulation humide selon l'invention.

*UTILISATION D'UN PSA*

Un objet de l'invention est l'utilisation d'au moins un Polymère SuperAbsorbant - PSA- pour augmenter le taux d'hydratation d'une composition sèche à base de liant hydraulique (a), incorporant au moins un Polymère SuperAbsorbant -PSA- (b) et une source d'ions aluminium (a) et/ou (c), et destinée à la préparation d'une formulation humide pour le bâtiment.

**EXEMPLES**

**I. MATERIAUX MIS EN ŒUVRE** :

1.1 Liants (a) qui sont des sources d'alumine (c) (non conformes à la présente invention)

- Aluminates de Calcium

    - TERNAL® RG de Kerneos ® [- CaO.Al2O3 - 2CaO.Al2O3.SiO2 - 12CaO.7Al2O3 - 2CaO.SiO2 - 4CaO.Al2O3.Fe2O3]

    - DENKA® SC-1 de Newchem® [Al2O3 22 - 25 % - CaO 39-45 % -SO3 26 - 30 %]

    - TERNAL ® WHITE, liant principalement constitué de CA, $CA_2$ et secondairement de $C_{12}A_7$, Aa. Teneur en alumine > 68%, teneur en CaO < 31%, surface spécifique blaine > 3700 $cm^2$/g. Fournisseur : Kerneos. Site de production : Le Teil (Fr).

- Ciment sulfo-alumineux:

    - Liant sulfo-alumineux est le CTS 25 Belitex (75% de CSA, 25% de gypse).

1.2 Liants (a) qui ne sont pas des sources d'alumine (c)

- Ciment Portland CEM I, 52,5N.
- Sulfates : Prestia selecta : semihydrate béta très finement broyé : 0.1%>160 microns.
- Chaux : *Chaux aerienne* : Chaubat CL90 de la société Bonargent-Goyon *Chaux blanche hydraulique* NHL-3.5Z CE commercialisée par Lafarge ciments, usine du Cruas. Composition : Chaux 89%, CEM II/A-LL 42,5 N CE PM-CP2 NF "blanc : 11%.

### 1.3 Polymère SuperAbsorbant (b)

- Aquasorb ® 3005S : Copolymère réticulé d'acrylamide et d'acrylate de potassium de SNF ® FLOERGER.
- Luquasorb® FP800 de BASF®: polyacrylate de sodium réticulé.

### 1.4 Source d'alumine (c)différente du liant (a)

- SA 502 Axilat ®: alumine "flash"100% amorphe de Momentive®.

### 1.5 retardateur (d)

- Acide citrique anhydre grain fin, de la société Gadot biochemical industries, teneur en eau 0.2%max, 5% maximum de refus au travers d'un tamis de 590 micromètres.

### 1.6 accélérateur complémentaire (e)

- Carbonate de lithium grade fin de RODACHEM. Teneur en $Li_2CO_3$ > 99%. Densité 2,049 g/cm$^3$, granulométrie moyenne 66 $\mu$m.
- Formiate de calcium

    1. Grade technique de PERSTORP ; Teneur en formiate de calcium supérieure à 98%, maximum 35% des particules ayant un diamètre > 250 $\mu$m.
    2. calcium formate 98%- SD-BY- de TRANSWORLD TRADING ; Teneur en formiate de calcium supérieure à 98%.

- Chlorure de sodium : sel fin Salinor des SALINS DU MIDI & SALINES.

### 1.7 rétenteur d'eau (f)

- Ether de cellulose: METHOCEL® 306 de viscosité type 38,000 mPa.s (viscosimètre rotatif Brookfield, modèle RV, 20 tr/min, 2% dans de l'eau à 20°C).
- Ether d'amidon : Solvitose® H20/60 : Ether d'amidon prégélatinisé, pH de 11 pour une solution à 5%, Viscosité Brookfield (solution à 6.8 % dans de l'eau déminéralisée à 25°C, n = 20 min-1, mobile n° 4) : environ 15.000 mPa.s.

### 1.8 charge (g)

- Sable (PE2LS) ou Fulchiron PE2LS : sablon siliceux de diamètre maximal inférieur ou égal 0,4 mm (Fournisseur : carrières de Fulchiron).

### 1.9 Hydrofugeant (i)

- Stéarate de Magnésium : grade technique commercialisé par la société Peter Greven.
- Savon de magnésium obtenu à partir de stéarine grade technique.
- Oléate de Sodium : Poudre fine, de couleur blanche à jaune léger, commercialisée par la société Peter Greven.

- Savon de soude obtenu avec de l'acide oléique technique.

### 1.10 Colorant (i)

- Pigment Bayferrox Rouge 110 : oxyde de fer synthétique $\alpha$ Fe2O3, 96% de Fe2O3, liant barytine, pouvoir colorant relatif entre 95 et 105%, commercialisé par la société Bayer.

### 1.11 Fibres (k)

- Fibre polyacrylonitrile FPAC 243/125, commercialisée par la société STW SCHWARWALDER TEXTIL WERKE, densité spécifique 1.18g/cm3, teneur en humidité maximum 2%, longueur approximative 0.8mm.

### 1.12 Antimousse (1)

- PERAMIN DEFOAM® 50 PE de la société KERNEOS®. Mélange d'esters hydrophobes, poudre blanche, granulométrie : 99% < 600$\mu$m.

### 1.13 Résine poudre redispersible (m)

- Poudre de polymère redispersible (VINNAPAS 5010N) :
  Résine re-dispersable dans l'eau de la société WACKER®. Copolymère vinyl acétate éthylène. Matière solide 98-100%, cendre : 8-13% colloïde protecteur polyvinylique alcool, granulométrie max. 4% de refus à 400 $\mu$m, granulométrie prédominante 0,5-8 $\mu$m, température de formation du film 4°C.

### 1.14 Agent rhéologique (n)

- *Epaississant* : Pangel® S9: sépiolite fabriquée par la société TOLSA®. Argile minérale appartenant à la famille des phyllosilicates et dont la nature chimique est un silicate de magnésium hydraté. Composition : Sépiolite (sans amiante) 85 %, Autres argiles 15 %.
- *Fluidifiant* : Melment ® F10 : Superplastifiant à base de polymélaminesulfonate pour mortiers à base de ciment ou sulfate de calcium.

### 1.15 Agent entraineur d'air ou agent moussant (o)

Hostapur OSB : sel de sodium et d'oléfine sulfonate, teneur en principe actif proche de 100%, fourni par la société Shin Etsu.

## II. TESTS:

La norme servant au test de détermination des résistances en flexion et compression est la NF EN 196-1.

## III. MORTIERS :

### Mode opératoire

Préparation des mélanges secs « Dry Mix » :

Les matières premières en poudre sont pesées indépendamment en suivant les formulations. Les matières premières sont alors mélangées dans un mélangeur poudre de type « GUEDU » durant 3 minutes.

Gâchage des « Dry Mix »

Les mortiers sec obtenus sont gâchés avec l'eau nécessaire afin d'obtenir une pâte homogène, dans un mélangeur planétaire de type « PERRIER », pendant une minute et trente secondes.

III .1 Exemples de mortiers basiques ayant comme liant un ciment de type Portland :

| Liant (a) : Ciment Portland | Essai-1 | Essai-2 | Essai-3 | Essai-4 | Essai-5 |
|---|---|---|---|---|---|
| Source d'alumine | SA 502 | TERNAL RG | DENKA SC-1 | TERNAL RG | DENKA SC-1 |
| Superabsorbant (Aquasorb 3005S) | 0,5 | 3 | 4 | 5 | 5 |
| Ciment Portland CEM I, 52,5N | 86,52 | 95,48 | 94,49 | 82,61 | 93,51 |
| Aluminate | 12,97 | 1,52 | 1,51 | 12,39 | 1,49 |
| Sable (PE2LS) | 0 | 0 | 0 | 0 | 0 |
| Taux de gâchage (%) | 71,00 | 130,00 | 147,57 | 180,00 | 168,57 |
| Quantité de poudre (Kg/L de pâte) | 0,98 | 0,62 | 0,56 | 0,47 | 0,50 |
| Résistance flexion F (21 jours) | 1,8 | 2,5 | 1,7 | 1,1 | 2,0 |
| Résistance à la compression C (21 jours) | 15,6 | 6,2 | 3,6 | 2,1 | 3,8 |

| Liant (a) : Ciment Portland | Essai-6 | Essai-7 |
|---|---|---|
| Source d'alumine | TERNAL RG | |
| Superaborbant (Aquasorb 3005S) | **2,5** | **0** |
| Ciment Portland CEM I, 52,5N | 61,36 | 61,36 |
| Aluminate | 6,14 | 6,14 |
| Sable (PE2LS) | 30 | 32,5 |
| Taux de gâchage (%) | 87,50 | 25,50 |
| **Quantité de poudre (Kg/L de pâte)** | **0,82** | **1,70** |
| Résistance flexion F (21 jours) | **2,8** | **4,1** |
| Résistance à la compression C (21 jours) | **6,7** | **58,8** |

III .2 Exemples de mortiers basiques ayant comme liant un ciment de type Alumineux :

| Liant (a): CAC | Essai-8 | Essai-9 | Essai-10 | Essai-11 |
|---|---|---|---|---|
| Superaborbant (Aquasorb 3005S) | **0,5** | **5** | **2,5** | **0** |
| CAC (Ternal White) | 69,65 | 66,5 | 33,25 | 35 |
| Sulfates (Prestia selecta) | 29,85 | 28,5 | 14,25 | 15 |
| Lithium Carbonate | 0,28 | 0,27 | 0,13 | 0,14 |
| Sable (PE2LS) | 0 | 0 | 50 | 50 |
| Taux de gâchage (%) | 45 | 152,2 | 89 | 21,75 |
| Quantité de poudre (Kg/L de pâte) | 1,28 | 0,53 | 0,80 | 1,71 |
| Résistance flexion F (21 jours) | 1,7 | 1,0 | 1,2 | 7,1 |
| Résistance à la compression C (21 jours) | 38,0 | 1,9 | 1,7 | 53,6 |

III .3 Exemples de mortiers basiques ayant comme liant un mélange ternaire (ciment portland / alumineux / sulfates) :

| Liant (a): Ternary mix | Essai-12 | Essai-13 |
|---|---|---|
| Superaborbant (Aquasorb 3005S) | 0,5 | 4 |
| Ciment Portland CEM I, 52,5N | 60,31 | 58,19 |
| CAC (Ternal White) | 27,13 | 26,18 |
| Sulfates (Prestia selecta) | 12,06 | 11,63 |
| Taux de gâchage (%) | 77,50 | 165,71 |
| Quantité de poudre (Kg/L de pâte) | 0,76 | 0,51 |
| Résistance flexion F (21 jours) | 0,6 | 0,5 |
| Résistance à la compression C (21 jours) | 5,0 | 1,0 |

III .4 Exemples de mortiers basiques ayant comme liant un ciment de type sulfo-alumineux :

| Liant (a): CSA | Essai-14 | Essai-15 | Essai-16 |
|---|---|---|---|
| Superaborbant (Aquasorb 3005S) | 0,5 | 4 | 0 |
| Ciment Calcium Sulfo-Aluminate CSA | 74,62 | 72 | 33,75 |
| Gypse | 24,87 | 24 | 11,25 |
| Sable (PE2LS) | 0 | 0 | 55 |
| Taux de gâchage (%) | 47 | 153 | 20,5 |
| Quantité de poudre (Kg/L de pâte) | 1,20 | 0,53 | 1,74 |
| Résistance flexion F (21 jours) | 3,5 | 0,8 | 6,3 |
| Résistance à la compression C (21 jours) | 31,52 | 1,84 | 47,07 |

**IV. COLLES A CARRELAGE** :

| | Essai-17 | Essai-18 | Essai-19 |
|---|---|---|---|
| Source d'alumine | Calcium formiate | SA502 | TERNAL RG |
| Ciment Portland CEM I, 52,5N | 88,8 | 88,8 | 88,8 |
| Superaborbant (Aquasorb 3005S) | 2,2 | 2,2 | 2,2 |
| Ether d'amidon (Addilose 200R) | 0,7 | 0,7 | 0,7 |
| Poudre de polymère redispersible (VINNAPAS 5010N) | 6,1 | 6,1 | 6,1 |
| FORMIATE de CALCIUM | 2,2 | 0 | 0 |
| alumine Amorphe (SA502) | 0 | 2,2 | 0 |
| Liant (a) :Aluminate de Calcium (TERNAL RG) | 0 | 0 | 2,2 |
| **Total** | 100 | 100 | 100 |
| Taux de gâchage (%) | 72,00 | 105,00 | 92,50 |
| **Quantité de poudre (Kg/L de pâte)** | **0,80** | **0,65** | **0,68** |

## Revendications

**1.** Composition sèche à base de liant minéral (a) et incorporant au moins un Polymère SuperAbsorbant -PSA- (b) et un composant accélérateur de prise (c), cette composition étant destinée à la préparation d'une formulation humide pour le bâtiment et **caractérisée en ce que**:

• elle comprend au moins une source d'ions aluminium;
• le liant (a) n'est pas une source d'ions aluminium;
• le composant (c) comporte au moins une source d'ions aluminium;
• la concentration en liant (a) est comprise dans les gammes de concentrations suivantes, exprimées en % poids sec de la composition et données dans un ordre croissant de préférence : [15- 99,5] ; [20 - 98] ; [25 - 97] ; [25- 96] ; [30 - 95];
• la concentration en composant (c) est comprise dans les gammes de concentrations suivantes, exprimées en % poids sec de la composition et données dans un ordre croissant de préférence : [0,10- 20] ; [0,15- 20] ; [0,15-15] ; [0,15- 10] ; [0,2- 10].

**2.** Composition selon la revendication 1, **caractérisée en ce que** le liant minéral (a) est choisi dans le groupe comprenant :

(i) les liants minéraux qui ne comportent pas de source(s) d'ions aluminium, de préférence parmi les ciments de portland et/ou parmi des ciments de laitier, des ciments géopolymères, des pouzzolanes naturelles, des cendres volantes, des ciments supersulfatés, les sulfates de calcium (gypse, hémihydrate et/ou anhydrite et/ou de chaux (vive, éteinte et/ou hydraulique) ;
(ii) les liants minéraux qui comportent une ou plusieurs sources d'ions aluminium,

- de préférence parmi les ciments à base d'aluminate de calcium (CAC) et/ou à base de sulfo-aluminate de calcium (CSA) et/ou les liants à haute teneur en phases cimentaires riches en alumine ;
- et plus préférentiellement encore liants hydrauliques comprenant :

○ au moins une phase choisie parmi $C_3A$, CA, $C_{12}A_7$, $C_{11}A_7CaF_2$, yéelemite ($C_4A_3\$$), $C_2A_{(1-x)}F_x$, avec $C \rightarrow CaO$ ; $A \rightarrow Al_2O_3$; $F \rightarrow Fe2O3$ et x appartenant à]0, 1] ;
○ des phases amorphes hydrauliques présentant un ratio molaire C/A compris entre 0,3 et 15 ;
○ et tels que les teneurs cumulées en $Al_2O_3$ de ces phases soient comprises entre :

3 et 70 % en poids du total du liant hydraulique ;
préférentiellement entre 7 et 50% en poids ;
et mieux entre 20 et 30% en poids.

**3.** Composition selon la revendication 1 ou 2, **caractérisée en ce que** la concentration en [PSA] (b) est définie comme suit, en % en poids sur sec, selon un ordre croissant de préférence :

$$0,1 \leq [PSA] \leq 20;$$

$$0,2 \leq [PSA] \leq 15;$$

$$0,3 \leq [PSA] \leq 10;$$

$$0,4 \leq [PSA] \leq 7;$$

$$0,5 \leq [PSA] \leq 6.$$

**4.** Composition selon l'une au moins des revendications précédentes, **caractérisée en ce que** le PSA (b) est choisi dans le groupe comprenant ou mieux encore constitué par :

- les polyacrylates de sodium réticulés ;
- les copolymères réticulés d'acrylamide et d'acrylate de sodium ;
- les copolymères réticulés d'acrylate de sodium ou d'acrylamide et d'un composé comprenant au moins un groupement de type sulfonique et/ou phosphonique ;
- les copolymères réticulés d'amidon et d'acrylonitrile hydrolysés ;
- les copolymères réticulés d'anhydride maléique et d'éthylène ;
- les carboxyméthylcelluloses réticulées ;
- l'oxyde polyéthylènique réticulé ;
- et/ou les polymères à base d'alcool polyvinylique greffés par de l'acide phosphorique ;
- et leurs mélanges.

**5.** Composition selon l'une au moins des revendications précédentes, **caractérisée en ce que** la source d'ions aluminium (c) est choisie parmi les composés suivants, utilisés seuls ou en combinaison :
les alumines amorphes, les phosphates d'aluminium, les sels fluorés d'aluminium, les carbonates d'aluminium, les aluminates de sodium, le sulfate d'aluminium et les sels d'aluns, de sodium et de potassium, les sels solubles d'aluminium de préférence choisis dans le groupe comprenant ou mieux encore constitué par: le sulfate d'aluminium, les chlorures et polychlorures d'aluminium, les nitrates et nitrites d'aluminium, le thiocyanate d'aluminium, le citrate d'aluminium et leurs mélanges.

**6.** Composition selon l'une au moins des revendications précédentes, **caractérisée en ce qu'**elle comprend, outre les composants (a)-(b)-(c) au moins l'un des composants suivants :

(d) un retardateur de prise ;
(e) un accélérateur de prise complémentaire ;
(f) un rétenteur d'eau ;
(g) une charge ;
(h) une charge légère ;
(i) un hydrofugeant ;
(j) un colorant ;
(k) des fibres ;
(1) un anti-mousse ;
(m) une résine en poudre redispersible ;
(n) un agent rhéologique ;
(o) un agent entraineur d'air ou agent moussant ;
(p) un agent générateur de gaz ;
(q) un ignifugeant.

7. Formulation humide pour le bâtiment **caractérisée en ce qu'**elle comprend la composition selon l'une au moins des revendications 1 à 6 et un liquide, de préférence de l'eau, de préférence selon un taux de gâchage supérieur ou égal à, en % en poids et selon un ordre croissant de préférence: 20; 25; 30; 40; 50; 60; 70 ; 80; 90 ; 100.

8. Produits durcis sur chantier ou préfabriqués en milieu industriel, à partir de la formulation selon la revendication 7.

9. Procédé de préparation de la formulation humide selon la revendication 8, **caractérisé en ce qu'**il consiste essentiellement à mélanger un liquide, de préférence de l'eau à tout ou partie des composants de la composition selon l'une au moins des revendications 1 à 7, le reste des composants étant ensuite incorporé progressivement dans le mélange si cela n'a pas été fait auparavant.

10. Procédé d'application sur une surface de bâtiment ou de fabrication d'ouvrage de bâtiment ou de génie civil, au moyen de la formulation humide selon la revendication 7.

11. Utilisation d'au moins un Polymère SuperAbsorbant -PSA- pour augmenter le taux d'hydratation d'une composition sèche selon l'une au moins des revendications 1 à 6 à base de liant minéral (a), incorporant au moins un Polymère SuperAbsorbant -PSA- (b), et destinée à la préparation d'une formulation humide pour le bâtiment.

**Patentansprüche**

1. Trockenzusammensetzung auf der Basis eines mineralischen Bindemittels (a), die mindestens ein superabsorbierendes Polymer -PSA-(b) und eine Abbindebeschleunigerkomponente (c) enthält, wobei diese Zusammensetzung für die Herstellung einer Nassformulierung für das Gebäude bestimmt ist und **dadurch gekennzeichnet ist, dass**:

   • es enthält mindestens eine Quelle für Aluminiumionen;
   • das Bindemittel (a) keine Quelle für Aluminiumionen ist;
   • Komponente (c) mindestens eine Aluminiumionenquelle aufweist;
   • die Bindemittelkonzentration (a) in den folgenden Konzentrationsbereichen enthalten ist, ausgedrückt in % Trockengewicht der Zusammensetzung und in zunehmender Reihenfolge der Präferenz angegeben: [15- 99,5] ; [20 - 98] ; [25 - 97] ; [25- 96] ; [30 - 95];
   • die Konzentration der Komponente (c) in den folgenden Konzentrationsbereichen enthalten ist, ausgedrückt in % Trockengewicht der Zusammensetzung und in zunehmender Reihenfolge der Präferenz angegeben: [0,10- 20] ; [0,15- 20] ; [0,15- 15] ; [0,15- 10] ; [0,2- 10].

2. Zusammensetzung nach Anspruch 1, **dadurch gekennzeichnet, dass** das mineralische Bindemittel (a) ausgewählt ist aus der Gruppe bestehend aus:

   (i) mineralische Bindemittel, die keine Aluminiumionenquelle(n) enthalten, vorzugsweise unter Portlandzementen und/oder unter Schlackenzementen, Geopolymerzementen, natürlichen Puzzolanen, Flugasche, supersulfatierten Zementen, Calciumsulfaten (Gips, Halbhydrat und/oder Anhydrit und/oder Kalk (schnelltrocknend, hydratisierend und/oder hydraulisch);
   (ii) mineralische Bindemittel, die eine oder mehrere Quellen von Aluminiumionen enthalten,

      - vorzugsweise Calciumaluminat (CAC) und/oder Calciumsulfo-aluminat (CSA) Zemente und/oder Bindemittel mit einem hohen Gehalt an tonerdereichen zementartigen Phasen;
      - und noch bevorzugter hydraulische Bindemittel beinhaltend:

         ◦ mindestens eine Phase, ausgewählt aus $C_3A$, $CA$, $C_{12}A_7$, $C_{11}A_7CaF_2$, Yelmite ($C_4A_3\$$), $C_2A_{(1-x)}F_x$, mit $C \rightarrow CaO$ ; $A \rightarrow Al_2O_3$, $F \rightarrow Fe_2O_3$ und x, die zu $]0, 1]$ gehören;
         ◦ amorphe hydraulische Phasen mit einem C/A-Molverhältnis zwischen 0,3 und 15;
         ◦ und so, dass die kumulativen $Al_2O_3$-Gehalte dieser Phasen dazwischen liegen:

            3 und 70 Gew.-% des gesamten hydraulischen Bindemittels;
            vorzugsweise zwischen 7 und 50 Gew.-%;
            und besser zwischen 20 und 30 Gew.-%.

3. Zusammensetzung nach Anspruch 1 oder 2, **dadurch gekennzeichnet, dass** die Konzentration des superabsorbierenden Polymers [PSA] (b) wie folgt definiert ist, in Gew.-% auf Trockenbasis, in zunehmender Reihenfolge der Präferenz:

$$0,1 \leq [PSA] \leq 20;$$

$$0,2 \leq [PSA] \leq 15;$$

$$0,3 \leq [PSA] \leq 10;$$

$$0,4 \leq [PSA] \leq 7;$$

$$0,5 \leq [PSA] \leq 6.$$

4. Zusammensetzung nach mindestens einem der vorstehenden Ansprüche, **dadurch gekennzeichnet, dass** das superabsorbierende Polymer PSA (b) ausgewählt ist aus der Gruppe bestehend aus oder besser noch bestehend aus:

- vernetzte Natriumpolyacrylate;
- vernetzte Copolymere aus Acrylamid und Natriumacrylat;
- vernetzte Copolymere aus Natriumacrylat oder Acrylamid und einer Verbindung, die mindestens eine Sulfon- und/oder Phosphongruppe umfasst;
- hydrolysierte vernetzte Copolymere aus Stärke und Acrylnitril;
- vernetzte Copolymere aus Maleinsäureanhydrid und Ethylen;
- vernetzte Carboxymethylcellulosen;
- vernetztes Polyethylenoxid;
- und/oder Polymere auf Basis von Polyvinylalkohol, die mit Phosphorsäure gepfropft sind;
- und deren Mischungen.

5. Zusammensetzung nach mindestens einem der vorstehenden Ansprüche, **dadurch gekennzeichnet, dass** die Aluminiumionenquelle (c) aus den folgenden Verbindungen ausgewählt ist, die einzeln oder in Kombination verwendet werden:
amorphe Aluminiumsalze, Aluminiumphosphate, fluorierte Aluminiumsalze, Aluminiumcarbonate, Natriumaluminate, Aluminiumsulfat und Alaun, Natrium- und Kaliumsalze, lösliche Aluminiumsalze, vorzugsweise ausgewählt aus der Gruppe bestehend aus oder besser noch bestehend aus: Aluminiumsulfat, Aluminiumchloriden und Polychloriden, Aluminiumnitraten und Nitriten, Aluminiumthiocyanat, Aluminiumcitrat und Mischungen davon.

6. Zusammensetzung nach mindestens einem der vorstehenden Ansprüche, **dadurch gekennzeichnet, dass** sie neben den Komponenten (a)-(b)-(c) mindestens eine der folgenden Komponenten umfasst:

(d) einen Abbindeverzögerer;
(e) einen zusätzlichen Abbindebeschleuniger;
(f) einen Wasserrückhaltemittel;
(g) einen Füllstoff;
(h) eine leichten Füllstoff;
(i) ein Imprägnierung Mittel;
(j) einen Farbstoff;
(k) der Fasern;
(1) ein Antischaummittel;
(m) ein redispergierbares pulverförmiges Harz;
(n) ein Rheologiemittel;
(o) ein Luftporenbildner oder Schaumbildner;
(p) ein gaserzeugendes Mittel;
(q) ein Flammschutzmittel.

7. Nassformulierung für das Gebäude, **dadurch gekennzeichnet, dass** sie die Zusammensetzung nach mindestens einem der Ansprüche 1 bis 6 und eine Flüssigkeit, vorzugsweise Wasser, vorzugsweise mit einer Mischrate größer oder gleich, in Gew.-% und in zunehmender Reihenfolge der Präferenz: 20; 25; 30; 40; 50; 60; 70; 80; 90; 100 umfasst.

8. Produkte, die vor Ort gehärtet oder in einer industriellen Umgebung vorgefertigt werden, basierend auf der Formulierung nach Anspruch 7.

9. Verfahren zur Herstellung der Nassformulierung nach Anspruch 8, **dadurch gekennzeichnet, dass** es im Wesentlichen aus dem Mischen einer Flüssigkeit, vorzugsweise Wasser, mit allen oder einem Teil der Komponenten der Zusammensetzung nach mindestens einem der Ansprüche 1 bis 7 besteht, wobei der Rest der Komponenten dann schrittweise in die Mischung eingearbeitet wird, wenn dies nicht zuvor geschehen ist.

10. Verfahren zum Auftragen auf eine Gebäudeoberfläche oder zum Herstellen einer Hoch- oder Tiefbaukonstruktion unter Verwendung der Nassformulierung nach Anspruch 7.

11. Verwendung von mindestens einem superabsorbierendes Polymer -SAP- zur Erhöhung der Hydratationsrate einer Trockenzusammensetzung nach mindestens einem der Ansprüche 1 bis 6 auf Basis eines mineralischen Bindemittels (a), das mindestens ein Superabsorbierendes Polymer -SAP-(b) beinhaltet und für die Herstellung einer Nassformulierung für das Gebäude bestimmt ist.

**Claims**

1. Dry composition based on a mineral binder (a) and incorporating at least one SuperAbsorbent Polymer -SAP- (b) and a setting accelerating component (c), with this composition being intended for preparing a moist formulation for the building industry and **characterised in that**:

   • it comprises at least one source of aluminium ions;
   • the binder (a) is not a source of aluminium ions;
   • the component (c) comprises at least one source of aluminium ions;
   • the concentration in binder (a) is within the following concentration ranges, expressed as a % of dry weight of the composition and given in an increasing order of preference: [15- 99.5]; [20 - 98]; [25 - 97]; [25- 96]; [30 - 95];
   • the concentration in component (c) is within the following concentration ranges, expressed as a % of dry weight of the composition and given in an increasing order of preference: [0.10- 20]; [0.15- 20]; [0.15- 15]; [0.15- 10]; [0.2- 10].

2. Composition according to claim 1, **characterised in that** the mineral binder (a) is chosen from the group comprising:

   (i) mineral binders that do not contain any source(s) of aluminium ions, preferably from among Portland cements and/or from among slag cements, geopolymer cements, natural pozzolans, fly ashes, supersulfated cements, calcium sulphates (gypsum, hemihydrate and/or anhydrite and/or lime (quick, slaked and/or hydraulic);
   (ii) mineral binders that comprise one or several sources of aluminium ions,

   - preferably from among cements with a calcium aluminate (CAC) base and/or with a calcium sulphoaluminate (CSA) base and/or binders with a high content in cementing phases rich in alumina;
   - and even more preferably hydraulic binders comprising:

     ◦ at least one phase chosen from among $C_3A$, $CA$, $C_{12}A_7$, $C_{11}A_7CaF_2$, yeelemite ($C_4A_3\$$), $C_2A_{(1-x)}F_x$, with $C \rightarrow CaO$; $A \rightarrow Al_2O_3$; $F \rightarrow Fe2O3$ and x belonging to [0, 1];
     ◦ hydraulic amorphous phases that have a C/A molar ratio between 0.3 and 15;
     ◦ and such that the cumulative contents in $Al_2O_3$ of these phases is between:

       3 and 70% by weight of the total of the hydraulic binder;
       preferably between 7 and 50% by weight;
       and better between 20 and 30% by weight.

3. Composition according to claim 1 or 2, **characterised in that** the concentration in [SAP] (b) is defined as follows, as a % by dry weight, according to an increasing order of preference:

$$0.1 \leq [SAP] \leq 20;$$

$$0.2 \leq [SAP] \leq 15;$$

$$0.3 \leq [SAP] \leq 10;$$

$$0.4 \leq [SAP] \leq 7;$$

$$0.5 \leq [SAP] \leq 6.$$

4. Composition according to at least one of the preceding claims, **characterised in that** the SAP (b) is chosen from the group comprising or even better formed from:

 - cross-linked sodium polyacrylates;
 - cross-linked copolymers of acrylamide and sodium acrylate;
 - cross-linked copolymers of sodium acrylate or of acrylamide and of a compound comprising at least one group of the sulphonic and/or phosphonic type;
 - cross-linked copolymers of hydrolysed starch and of acrylonitrile;
 - cross-linked copolymers of maleic anhydride and of ethylene;
 - cross-linked carboxymethylcelluloses;
 - cross-linked polyethylenic oxide;
 - and/or polymers with a base of polyvinylic alcohol grafted by phosphoric acid;
 - and mixtures thereof.

5. Composition according to at least one of the preceding claims, **characterised in that** the source of aluminium ions (c) is chosen from among the following components, used alone or in combination:
 amorphous alumina, aluminium phosphates, aluminium fluorine salts, aluminium carbonates, sodium aluminates, aluminium sulphate and the salts of alum, sodium and potassium, aluminium soluble salts chosen preferably in the group comprising or better consisting in: aluminium sulphate, aluminium chlorides and polychlorides, aluminium nitrates and nitrites, aluminium thiocyanate, aluminium citrate and the mixtures thereof.

6. Composition according to at least one of the preceding claims, **characterised in that** it comprises, in addition to the components (a)-(b)-(c) at least one of the following components:

 (d) a setting retardant;
 (e) an additional setting accelerator;
 (f) a water retaining agent;
 (g) a filler;
 (h) a light filler;
 (i) a waterproofing;
 (j) dye;
 (k) fibres;
 (1) an antifoaming agent;
 (m) a redispersible resin powder;
 (n) a rheological agent;
 (o) an air entraining agent or a foaming agent;
 (p) a gas generating agent;
 (q) a fire retardant.

7. Moist formulation for the building industry **characterised in that** it comprises the composition according to at least one of claims 1 to 6 and a liquid, preferably water, preferably according to a mixing rate greater than or equal to, as a % by weight and according to an increasing order of preference: 20; 25; 30; 40; 50; 60; 70; 80; 90; 100.

8. Products hardened on-site or pre-fabricated in an industrial setting, using the formulation according to claim 7.

9. Method for preparing the moist formulation according to claim 8, **characterised in that** it consists substantially in mixing a liquid, preferably water or all or a part of the components of the composition according to at least one of claims 1 to 7, the rest of the components then being progressively incorporated into the mixture if this has not been done beforehand.

10. Method for applying on a building surface or of the manufacture of a building or civil engineering structure, by means of the moist formulation according to claim 7.

11. Use of at least one SuperAbsorbent Polymer -SAP- in order to increase the rate of hydration of a dry component according to at least one of claims 1 to 6 based on a mineral binder (a), incorporating at least one SuperAbsorbent Polymer -SAP- (b), and intended for preparing a moist formulation for the building industry.

**RÉFÉRENCES CITÉES DANS LA DESCRIPTION**

**Documents brevets cités dans la description**

- US 7288147 B
- FR 2955103 A
- FR 2955104 A
- FR 2955103
- FR 2955104
- US 2003144386 A
- US 2010190888 A
- US 20100190888 A
- WO 2004101952 A